# EUROPÄISCHE PATENTSCHRIFT

(11) **EP 1 640 646 B1**
(45) Veröffentlichungstag und Bekanntmachung des Hinweises auf die Patenterteilung: **22.08.2007**
(21) Anmeldenummer: 05012858.6
(22) Anmeldetag: 15.06.2005
(51) Int. Cl.: F16J 15/46

(54) **Dichteinrichtung**
Sealing arrangement
Garniture d'étancheité

(30) Priorität: 23.09.2004 DE 102004038114
(43) Veröffentlichungstag der Anmeldung: 29.03.2006
(73) Patentinhaber: FRIMO Group GmbH, 49504 Lotte (DE)
(72) Erfinder: Kunzmann, Olaf, 49090 Osnabrück (DE)
(74) Vertreter: Moldenhauer, Herbert

(56) Entgegenhaltungen:
- DE-A1- 2 014 705
- DE-A1- 3 900 580
- DE-A1- 10 220 842
- DE-A1- 10 246 370
- DE-A1- 19 708 579
- FR-A- 2 837 862
- GB-A- 2 333 118

## Beschreibung

### Technisches Gebiet

Die Erfindung betrifft eine Dichteinrichtung Dichteinrichtung für den Spalt zwischen zwei benachbarten, unnachgiebigen Maschinenteilen, umfassend zumindest einen über einen unnachgiebigen Stützkörper aufblasbaren, elastisch dehnbaren Schlauch, der in eine Nut mit einer Mündung in der Seitenwand eines der Maschinenteile eingefügt ist und der aufgeblasen an das der Mündung gegenüberliegende Maschinenteil anlegbar ist, wobei wenigstens ein Ende des Schlauches mit einer umlaufenden und in seinen Innenraum eingreifenden Einstülpung versehen ist, wobei der Stützkörper innenseitig in die Einstülpung eingefügt ist, wobei der Schlauch nach dem Aufblasen auch radial außerhalb des Stützkörpers und damit auf der ganzen Länge L der Nut an das andere Maschinenteil anlegbar ist.

### Stand der Technik

Eine solche Dichteinrichtung ist aus der DE 102 20 842 A1 bekannt. Sie ist zur Verwendung in Formwerkzeugen einer Länge von mehr als 1 m bestimmt und dient zur Herstellung von Schaumformteilen, die u. a. als Armaturenbrett, Autohimmel oder Tür- und Seitenwandverkleidungen in Kraftfahrzeugen zur Anwendung gelangen. Der darin eingefüllte Reaktionsschaum ist vor seiner Verfestigung äußerst dünnflüssig, was zum Austreten von Bestandteilen des Reaktionsschaums nach dem Schließen der Werkzeuge führen kann und dabei zu einer Verschmutzung der Umgebung ebenso wie zu Werkstückfehlern. Bei der Dichteinrichtung nach dem o.g. Patent sind die Enden des weichelastischen Dichtschlauchs nach innen eingestülpt und auf einen darin eingefügten, unnachgiebigen Stützkörper dichtend aufgezogen. Der Schlauch vermag sich dadurch beim Einspeisen von Druckluft über die Stützkörper auf seiner ganzen Länge und somit auch im Bereich der Einstülpung in radialer Richtung auszudehnen und den Dichtspalt auf der ganzen Länge und damit auch im Bereich der unnachgiebigen Stützkörper abzudichten. Dabei wurde allerdings beobachtet, dass der Schlauch nach mehreren Arbeitszyklen dazu neigt, sich zumindest an einem Ende von den Stützkörpern abzukrempeln, was zur Wirkungslosigkeit der Dichteinrichtung führt, eine Reparatur erfordert und eine Betriebsunterbrechung bedingt.

Aus der DE PS 196 15 055 ist eine weitere ringförmig geschlossen ausgebildete Dichteinrichtung zum Verschließen des Dichtspaltes zwischen einer Fensteröffnung und einer darin eingefügten Dichtplatte bekannt, bei der die Enden eines ringförmig in den Dichtspalt eingefügten, elastisch aufweitbaren Schlauches radial nach innen verlängert und ohne Einstülpung auf dem Außenumfang von unnachgiebigen Schlauchtüllen festgelegt sind. Um eine gute Abdichtung zu erzielen, ist es vorgesehen, im Bereich der Stoßstelle der beiden Schlauchenden, an der zwei Radien des Schlauches aufeinander stoßen, eine Dichtmasse anzubringen. Dieses ist bei einem in einem Arbeitstakt zyklisch zu öffnenden und zu schließenden Formwerkzeug nicht möglich.

### Darstellung der Erfindung

Der Erfindung liegt die Aufgabe zu Grunde, die Dichteinrichtung nach dem eingangs erwähnten Patent derart weiter zu entwickeln, dass ein sicherer Sitz der eingestülpten Enden des Schlauches auf den unnachgiebigen Stützkörpern erzielt und die Gefahr beseitigt wird, dass sich die Enden nach mehreren Arbeitszyklen von den Stützkörpern abkrempeln.

Diese Aufgabe wird erfindungsgemäß bei einer Dichteinrichtung nach dem eingangs genannten Patent durch die kennzeichnenden Merkmale von Anspruch 1 gelöst. Auf vorteilhafte Ausgestaltungen nehmen die Unteransprüche Bezug.

Bei der erfindungsgemäßen Dichteinrichtung ist es vorgesehen, dass wenigstens ein Ende des Schlauches mit einer umlaufenden und in seinen Innenraum eingreifenden Einstülpung versehen ist, dass der unnachgiebige Stützkörper dichtend in die Einstülpung eingefügt ist, dass der Schlauch nach dem Aufblasen auf der ganzen Länge der Nut an das andere Maschinenteil anlegbar ist und dass die Nut im Bereich der Einstülpung und des Stützkörpes mit wenigstens einer sich quer zur Längsrichtung des Schlauches erstreckenden, unnachgiebigen Hinterschneidung versehen ist, in die der Schlauch zumindest im aufgeblähten Zustand einfügbar ist. Die Erfindung geht bei dieser Ausbildung aus von der Beobachtung, dass sich ein elastisch dehnbarer Schlauch, in den von einem Ende ausgehend Druckluft eingespeist wird, niemals auf der ganzen Länge gleichzeitig und in gleichem Umfang ausdehnt, sondern zuerst am Ort der Drucklufteinspeisung. Ausgehend von dieser Stelle setzt sich die Aufblähung des Schlauches dann bei weiterem Druckanstieg in Längsrichtung fort, bis im ganzen Schlauch ein ausgeglichener Druck herrscht und die weitere Aufblähung zum Stillstand kommt. Offenbar beinhaltet diese bei einer festen Installation immer in derselben Längsrichtung fortschreitende Aufdehnbewegung des Schlauches eine Kraftkomponente in derselben Längsrichtung, der erfindungsgemäß dadurch entgegengewirkt wird, dass die Nut im Bereich der Einstülpung und des Stützkörpes mit wenigstens einer sich quer zur Längsrichtung erstreckenden, unnachgiebigen Hinterschneidung versehen ist, in die sich der Schlauch zumindest im aufgeblähten Zustand einfügt, vorteilhaft schon zuvor, und in der er sich dabei zugleich verkrallt. Dies verhindert beim Aufblähprozess eine Axialverlagerung des Schlauches in der Nut. Nach der Druckentfaltung, die regelmäßig vor dem Öffnen des Werkzeugs stattfindet, kehrt der Schlauch dadurch in seine Ruhelage zurück, ohne dass eine Längsverschiebung stattgefunden hat. Auch nach zahlreichen Arbeitszyklen wurde kein Abkrempeln des Schlauches von den Stützkörpern mehr beobachtet.

Das Vorhandensein, die Anordnung und Ausbildung sowie die Dimensionierung der mindestens einen Hinterschneidung sind von entscheidender Bedeutung. Generell sollte die Hinterschneidung an einer sich quer zur Längsrichtung des Schlauches erstreckenden, unverformbaren Stufe angebracht sein, die von dem vorspringenden Ende des Stützkörpers abgewandt ist. Zweckmäßig ist eine langestreckte Ausbildung der Hinterschneidung. Es können aber auch mehrere punktförmige Hinterschneidungen zur Anwendung gelangen, hinter denen sich der aufgeblähte Schlauch verkrallen kann.

Ferner können derartige Hinterschneidungen an Vorsprüngen ebenso vorhanden sein, wie an Eintiefungen der Seinwände der Nut. Wichtig ist somit vor allem die Verkrallungsmöglichkeit des Schlauches zumindest im aufgeblähten Zustand.

Nach einer vorteilhaften Ausgestaltung ist es vorgesehen, die Nut auf beiden Seiten der Einstülpung jeweils mit zumindest einer Hinterschneidung zu versehen, wobei die einander gegenüberliegenden Hinterschneidungen zweckmäßig einander spiegelbildlich zugeordnet und spiegelbildlich gestaltet sind. Eine unsymmetrische Anordnung ist dadurch nicht ausgeschlossen. Hierdurch ergibt sich eine bessere Verankerung des aufgeblähten Schlauches, insbesondere, wenn die Nut in Längsrichtung des Schlauches wenigstens zwei hintereinander liegende Hinterschneidungen aufweist.

Die Dimensionierung der Hinterschneidung muss dem Durchmesser des Schlauches angepasst sein. Bei einem Außendurchmesser des Schlauches von 10 bis 15 mm und den in Druckluftnetzen üblichen Betriebsdrücken liegt eine sinnvolle Tiefe bei 1 bis 4 mm, zweckmäßig bei 1,5 bis 3 mm. Der Fachmann ist problemlos in der Lage, durch einfache Versuche günstige Werte zu ermitteln.

Um Schnittverletzungen und punktuelle Überdehnungen des Schlauches durch das wiederholte oder andauernde, elastische Einschmiegen in die Hinterschneidung zu vermeiden, hat es sich als vorteilhaft bewährt, wenn die Hinterschneidung auf der der Einstülpung zugewandten Seite von abgerundetem Profil ist. Sie kann dabei an mindestens einem Vorsprung vorgesehen sein, der in die Nut eingreift.

Der Stützkörper und der Schlauch haben zweckmäßig ein aneinander angepasstes Profil, vorteilhaft ein rundes Profil.

Um ein völliges Kollabieren des Schlauches nach der Druckentlastung und bei äußerer Krafteinwirkung zu verhindern, hat es sich als vorteilhaft bewährt, in den Schlauch einen Stützkörper einzufügen, der einen geringfügig kleineren Durchmesser hat als der Schlauch auf seiner Innenseite. Der Stützkörper kann auch innen hohl sein und beispielsweise durch eine Wendelfeder gebildet sein. Die zum Aufblähen verwendete Druckluft kann sich dadurch leichter über die ganze Länge L des Schlauches verteilen, was eine gleichmäßig schnelle Aufdehnung auf der ganzen Länge L begünstigt und damit das schnellere Erreichen einer guten Dichtwirkung.

Nach einer anderen Ausgestaltung ist es vorgesehen, dass die Hinterschneidung an einer Eintiefung vorgesehen ist, die in die Wandung der Nut eingreift. Die Herstellung der Hinterschneidung und das Einfügen der Dichteinrichtung in die Nut wird dadurch vereinfacht.

Als zweckmäßig hat es sich erwiesen, wenn jede Eintiefung und/oder jeder Vorsprung nicht punktförmig gestattet sondern länglich ausgebildet ist und sich im wesentlichen quer zu der Nut erstreckt. Eine solche Eintiefung oder ein solcher Vorsprung kann somit als im wesentlichen geradlinige Quernut oder Querrippe ausgebildet sein, die sich im wesentlichen quer zu der Nut erstreckt. Eine leicht gewölbte oder leicht schräg zur Längsrichtung verlaufende Anordnung ist dadurch nicht ausgeschlossen.

Wenn in Längsrichtung des Schlauches mehrere hintereinander liegende Quernuten oder Querrippen im Bereich der Einstülpung vorgesehen sind, soll in dieser Richtung der geringste gegenseitige Abstand der Quernuten oder Querrippen zumindest dem zweifachen Wert der Wandstärke des Schlauches entsprechen, um dem Schlauch beim Einfügen ein elastisches Ausweichen zu ermöglichen und Überdehnungen zu vermeiden. Zweckmäßig sind derartige Querrippen oder Quernuten in allen mit dem Schlauch in Berührung gelangenden Stellen und auch am oberen Ende abgerundet ausgebildet, um ein beschädigungsfreies Einfügen und eine beschädigungsfreie Ausdehnung des Schlauches sicher zu stellen.

Der Schlauch besteht zweckmäßig aus weichelastischem, elastomerem Werkstoff. Die Wandstärke kann bei einem Außendurchmesser von 8 bis 15mm 1 bis 3 mm betragen.

Die Nut kann im Bereich Ihrer Mündung verengt sein, um ein unbeabsichtigtes Herausfallen des Schlauches aus der Mündung zu verhindern. Insbesondere für eine Überkopfanwendung ist dies von Vorteil. Sie kann zweckmäßig sein, um während der Benutzung ein Eindringen von Verunreinigungen in die Nut zu verhindern, was zu einer Beeinträchtigung der Funktion der Dichteinrichtung führen könnte.

Die Eintiefung und/oder der Vorsprung kann zugleich einen Ansatz des Stützkörpers übergreifen, der diesen an seiner Unterseite im Bereich der Einstülpung ergänzt. Ein solcher Stützkörper weist somit eine Unförmige Gestalt auf, dessen oberer, zylindrischer Schenkel in die Einstülpung des Schlauches eingefügt ist und dessen unterer, an die Nut angepasster Schenkel die Einstülpung gegebenenfalls auf ihrer ganzen Länge übergreift und es ermöglicht, die zum Auffüllen des Schlauches nötige Druckluft dem Stützkörper von unten zuzuführen. Das Werkzeug kann dadurch kürzer ausgebildet werden als bei einer Zuführung der Druckluft aus der Richtung der gedacht verlängerten Längsachse des Schlauches.

Um das zusätzliche Volumen des durch die Einstülpung im Bereich des Stützkörpers doppelwandigen Schlauches aufnehmen zu können, ist die Nut nur im Bereich der Einstülpung in Querrichtung zweckmäßig so erweitert, dass der Schlauch nach dem Einfügen des Stützkörpers darin einfügbar ist, ohne dass eine nennenswerte, elastische Verformung eintritt. Die Nut umgibt den Schlauch somit im Bereich der durch die Einstülpung gebildeten Verdickung nach Art einer Glocke, wodurch unzulässig große Deformierungen des Schlauches vermieden werden, die zu einer Beschädigung führen könnten. Wenn die Hinterschneidung an zumindest einer in die Nut eingreifenden Querrippe vorgesehen ist, kann die Querrippe so bemessen sein, dass die eingestülpte Wandung des Schlauches schon vor der Einspeisung von Druckluft elastisch deformiert ist. Als zweckmäßig hat es sich bei einer solchen Ausbildung erwiesen, wenn die Querrippe so bemessen ist, das die eingestülpte Wandung schon vor der Einspeisung von Druckluft an der Stelle der größten Deformierung um 30 bis 70 % zusammengedrückt ist, zweckmäßig um 40 bis 60 %. Entsprechendes gilt für den Fall, dass die Hinterschneidung an einer Quernut vorgesehen ist. Wichtig ist in jedem Fall, dass die andauernde Verformung des Schlauches durch die Quernut oder Querrippe auf Teilbereiche der Einstülpung beschränkt ist und ein Maß nicht überschreitet, bei dem Setz- und Fließprozesse des elastomeren Werkstoffes eintreten, aus dem der Schlauches besteht.

Die mit der Erfindung erzielten Vorteile bestehen in einer einfachen Herstellbarkeit der Dichteinrichtung bei einer hohen Betriebssicherheit während vieler Arbeitszyklen.

### Kurzbeschreibung der Zeichnung

Fig. 1: ein geschlossenes Formwerkzeug mit einer darin eingesetzten Dichteinrichtung in längsgeschnittener Darstellung
Fig. 2: Den unteren Teil des Werkzeugs nach Fig. 1 in einer Ansicht von oben
Fig. 3: Einen in die Einstülpung einfügbaren, unnachgiebigen Stützkörper in einer Ansicht von vorn
Fig. 4: Den Stützkörper nach Fig. 3 in perspektivischer Ansicht von vorn
Fig. 5: Der untere Teil des Werkzeugs nach Fig. 1 in längsgeschnittener Darstellung
Fig. 6: Das Werkzeug nach Fig. 5 in quergeschnittener Darstellung

### Ausführung der Erfindung

Die in der Zeichnung wiedergegebene Dichteinrichtung ist für den Spalt 1 zwischen zwei benachbarten, unnachgiebigen Maschinenteilen 20, 30, bestimmt und umfasst einen über einen unnachgiebigen Stützkörper 2 aufblasbaren, elastisch dehnbaren Schlauch 3, der in eine Nut 4 in der Seitenwand des unteren der Maschinenteile 30 eingefügt ist und der aufgeblasen an das der Mündung der Nut 4 gegenüberliegende Maschinenteil 20 anlegbar ist. Das linke Ende des Schlauches 3 ist mit einer umlaufenden und in seinen Innenraum eingreifenden Einstülpung 6 versehen. Der Stützkörper 2 ist unter elastischer Vorspannung innenseitig in die Einstülpung 6 eingefügt, ohne dass Verklebungsmittel zur Anwendung gelangen. Der Schlauch 3 ist dadurch nach dem Aufblasen mit Druckluft auf der ganzen Länge der Nut 4 an das andere Maschinenteil 20 anlegbar. Das 5 linke Ende der Nut 4 ist durch eine senkrecht zu ihrer Längsrichtung verlaufende Stirnwand oder eine weitere Dichtung begrenzt, an die sich der Schlauch 3 beim Aufblähen mit einem einfachen Biegeradius ebenfalls dichtend anzuschmiegen vermag. Die Nut 4 ist im Bereich der Einstülpung 6 mit wenigstens einer sich quer zur Längsrichtung erstreckenden, unnachgiebigen Hinterschneidung versehen, Fig. 2, die an vier symmetrisch angeordneten und in die Nut vorspringenden Querrippen angeordnet sind und die die Wandung des Schlauches 3 im vorliegenden Beispiel schon vor der Aufblähung um max. 50 % elastisch zusammendrücken. Dadurch ist der Schlauch daran gehindert, sich beim Aufblähen von dem säulenförmigen Vorsprung 7 des Stützkörpers 2 abzukrempeln, was die Erzielung einer Dichtwirkung unmöglich machen würde. Im oberen, an den Dichtspalt angrenzenden Bereich des Schlauches sind keine Querrippen vorhanden. Der Schlauch kann sich dadurch in dieser Zone ungehindert aufblähen und an die der Nut gegenüberliegende Begrenzungsfläche des abzudichtenden Maschinenteils 20 dichtend anlegen.

Die Querrippen sind im vorspringenden Bereich sowie am oberen Ende halbrund ausgebildet, von geraden Verlauf und erstrecken sich quer zu der Nut. Sie sind so dimensioniert, dass die gedoppelte Wandung des Schlauches im Bereich der Einstülpung zwischen den Rippen und dem säulenförmigen Vorsprung 7 des Stützkörpers 2 schon vor der Aufblähung auf maximal etwa 50 % des ursprünglichen Wertes vermindert ist. Hierdurch in Verbindung mit der im vorspringenden Bereich abgerundeten Ausbildung der Rippen wird eine sichere Festlegung des Schlauches in der Nut erreicht und sichergestellt, dass der Schlauch unter Vermeidung von Klebstoffen und mechanischen Beschädigungen in die Nut 4 eingefügt werden kann. Die Montage ist dadurch vereinfacht.

Der gegenseitige Abstand der Querrippen in Längsrichtung des Schlauches 5 beträgt bei einer Wandstärke des Schlauches von etwa 1,6 mm etwa 3,5 mm ca. 3 bis 5 mm. Die zwischen den Querrippen und dem Stützkörper 2 elastisch verformte Wandung des Schlauchs vermag in die Zwischenzonen zwischen den Querrippen sowie in Längsrichtung beiderseits elastisch auszuweichen, was Setzprozesse und Überdehnungen des Werkstoffes des Schlauches verhindert und die Dauerhaftigkeit der Dichteinrichtung verbessert. Es ist offensichtlich, dass statt der Querrippen auch Quernuten zur Anwendung gelangen können, die den vorstehenden Angaben entsprechend gestaltet und dimensioniert sind.

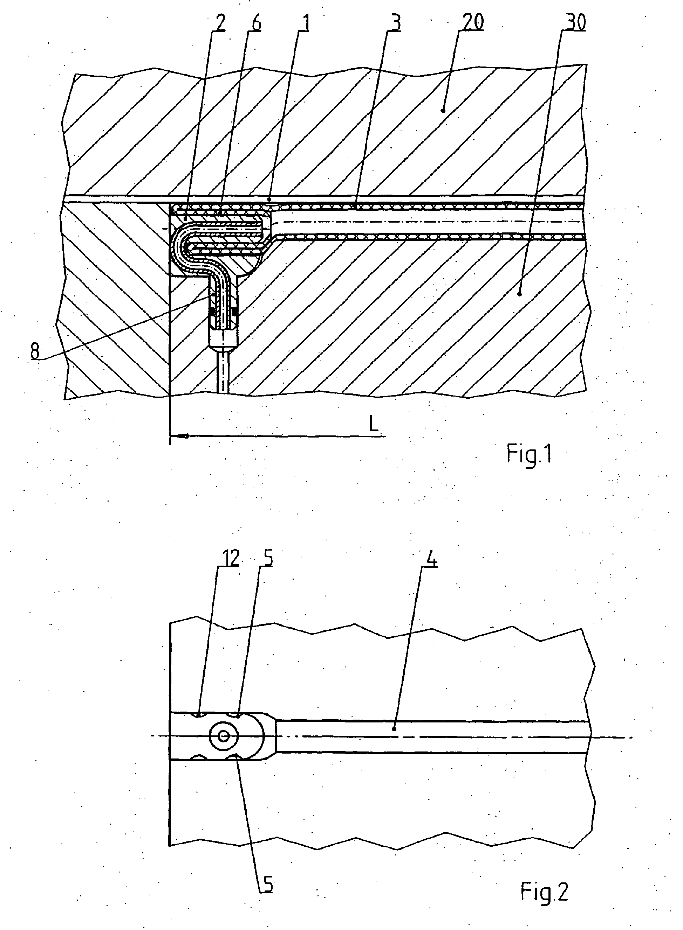

Bei dem Ausführungsbeispiel nach den Fig. 1 bis 6 übergreifen die Querrippen Zugleich einen Ansatz des Stützkörpers 2, der diesen an seiner Unterseite im Bereich der Einstülpung 6 ergänzt und mit etwa der gleichen Länge und parallel zu diesem vorspringt. Der Stützkörper 2 wird hierdurch zusätzlich in dem unteren Maschinenteil 30 fixiert, was dazu beiträgt, Schwingungen zu verhindern, die ein Abkrempeln der Einstülpung 6 von dem Stützkörper 2 begünstigen würden. Über den Ansatz wird zugleich die Druckluft eingespeist, die für das Aufblähen des Schlauches 3 erforderlich ist. Dazu ist am unteren Ende ein senkrecht nach unten vorstehendes, einstückig angeformtes Versorgungsrohr 7 vorgesehen, dass durch eine O - Ringdichtung gegenüber der aufnehmenden Bohrung im unteren Maschinenteil 30 abgedichtet ist.

Die Nut ist nur im Bereich der Einstülpung glockenförmig so erweitert, dass der Schlauch 3 nach dem Einsetzen des Stützkörpers 2 darin einfügbar ist, ohne dass eine nennenswerte, elastische Verformung eintritt. Die elastischen Verformungen des Schlauches 3 sind somit auf den Bereich zwischen den Querrippen und dem Stützkörper 2 beschränkt.

Die im Bereich der Einstülpung einander gegenüberliegenden Querrippen 5 sind so bemessen, dass die eingestülpte Wandung des Schlauches schon vor der Einspeisung von Druckluft elastisch deformiert ist. An der Stelle der größten Deformierung ergibt sich zweckmäßig eine Zusammendrückung um 30 bis 70 %, vorzugsweise um 40 bis 60 % der ursprünglichen Gesamtdicke der Wandung in dem eingestülpten Bereich.

Fig. 2 zeigt das untere Werkzeug in einer Ansicht von oben. Die Nut 4 ist in dem Bereich, in den der Stützkörper eingefügt wird, glockenfömig erweitert, um das sich durch die Einstülpung ergebende, zusätzliche Werkstoffvolumen aufnehmen zu können. In diesem Bereich sind vier Querrippen 5, 12 angeordnet, die nach innen vorspringen und so dimensioniert sind, dass sich in Ihrem Bereich eine maximale Zusammenpressung der Wandung des Schlauches um ca. 50 % ergibt. In den übrigen Bereichen ist die Nut an ihrer Mündung verengt auf eine Weite, die geringer ist als der Durchmesser des Schlauches im unaufgeblähten Zustand. Die Differenz beträgt etwa 0,5 bis 2mm, vorteilhaft 0,8 bis 1,2 mm. Hierdurch kann die Dichteinrichtung auch in einer Überkopfposition zur Anwendung gelangen.

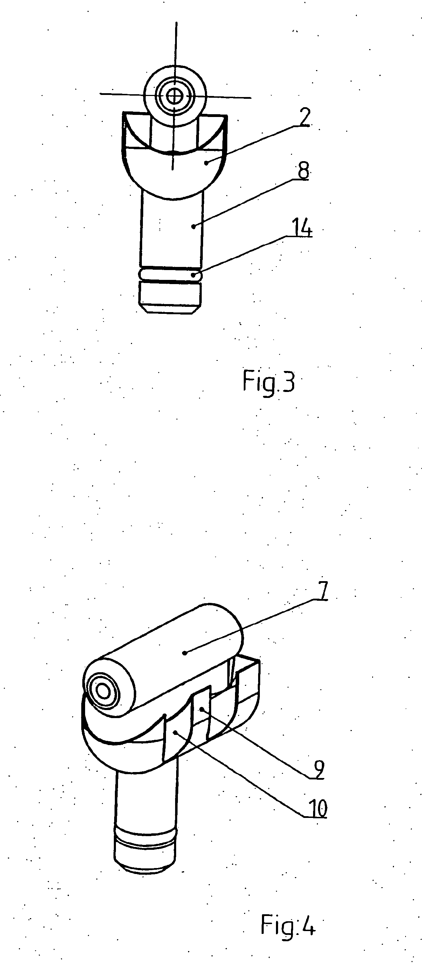

Fig. 3 zeigt einen in die Einstülpung einfügbaren, unnachgiebigen Stützkörper 2 in einer Ansicht von vorn. Er ist aus Kunststoff erzeugt und umfasst im unteren Teil ein Versorgungsrohr 8, über das Druckluft eingespeist werden kann.

Fig. 4 zeigt den Stützkörper nach Fig. 3 in perspektivischer Ansicht von vorn. Im unteren Bereich 9 sind sich senkrecht erstreckende Eintiefungen 10 angebracht, die auf die werkzeugseitigen Querrippen, Fig. 2, Bezugsziffer 5, aufgeschoben werden können und verhindern, dass sich Schwingungen bei der Einspeisung von Druckluft ergeben.

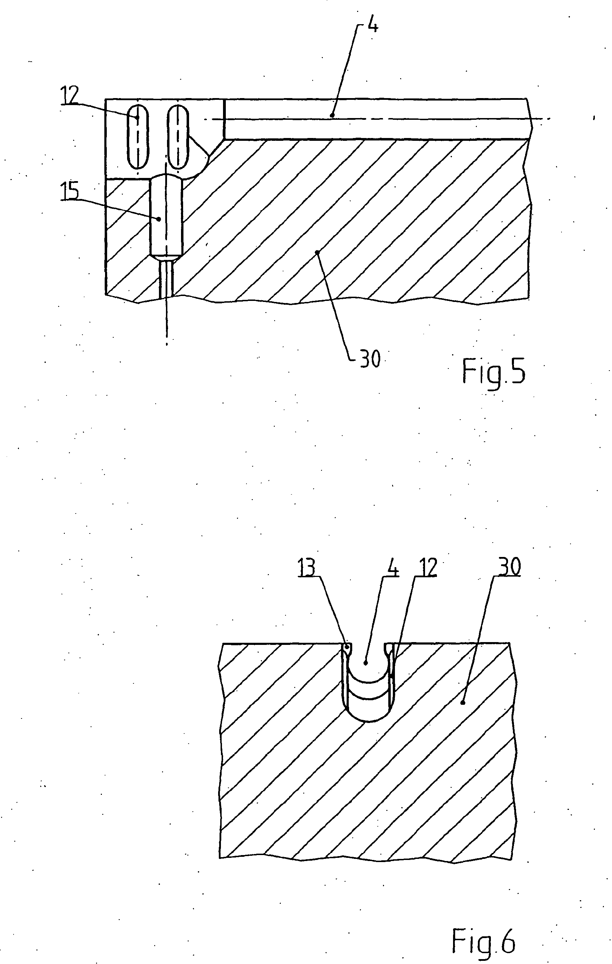

Fig. 5 zeigt den unteren Teil 30 des Werkzeugs nach Fig. 1 in längsgeschnittener Darstellung. In die nach unten abzweigende Bohrung 15 ist das Versorgungsrohr 8 des Stützkörpers 2 mittels einer Runddichtung 14 dichtend einfügbar.

Fig. 6 zeigt das Werkzeug nach Fig. 5 im Bereich der glockenförmigen Erweiterung in quergeschnittener Darstellung. Die Querrippen mit den Hinterschneidungen sind mit 12 bezeichnet, die die Nut 4 an ihrer Mündung einengenden Vorsprünge mit 13.

## Patentansprüche

1. Dichteinrichtung für den Spalt (1) zwischen zwei benachbarten, unnachgiebigen Maschinenteilen (20, 30), umfassend zumindest einen über einen unnachgiebigen Stützkörper (2) aufblasbaren, elastisch dehnbaren Schlauch (3), der in eine Nut (4) mit einer Mündung in der Seitenwand eines der Maschinenteile (20, 30) eingefügt ist und der aufgeblasen an das der Mündung gegenüberliegende Maschinenteil (30, 20) anlegbar ist, wobei wenigstens ein Ende des Schlauches (3) mit einer umlaufenden und in seinen Innenraum eingreifenden Einstülpung (6) versehen ist, wobei der Stützkörper (2) innenseitig in die Einstülpung (6) eingefügt ist, wobei der Schlauch (3) nach dem Aufblasen auch radial außerhalb des Stützkörpers und damit auf der ganzen Länge L der Nut (4) an das andere Maschinenteil (20, 30) anlegbar ist, **dadurch gekennzeichnet, dass** die Nut (4) zur Verhinderung einer Längsverschiebung des Schlauches beim Aufblähprozess im Bereich der Einstülpung (6) mit wenigstens einer sich quer zur Längsrichtung erstreckenden, unnachgiebigen Hinterschneidung (5) versehen ist, in der er sich im aufgeblähten Zustand quer zur Längsrichtung verkrallt.

2. Dichteinrichtung nach Anspruch 1, **dadurch gekennzeichnet, dass** die Nut (4) auf beiden Seiten im Bereich der Einstülpung (6) mit jeweils zumindest einer Hinterschneidung (5) versehen ist.

3. Dichteinrichtung nach Anspruch 1 oder 2, **dadurch gekennzeichnet, dass** die Nut (4) in Längsrichtung des Schlauches (3) wenigstens zwei hintereinander liegende Hinterschneidungen (5) aufweist.

4. Dichteinrichtung nach einem der Ansprüche 1 bis 3, **dadurch gekennzeichnet, dass** jede Hinterschneidung (5) in den den Schlauch (3) berührenden Teilbereichen abgerundet ausgebildet ist.

5. Dichteinrichtung nach einem der Ansprüche 1 bis 3, **dadurch gekennzeichnet, dass** die Hinterschneidung (5) an einer Querrippe vorgesehen ist, der in die Nut (4) eingreift.

6. Dichteinrichtung nach einem der Ansprüche 1 bis 3, **dadurch gekennzeichnet, dass** die Hinterschneidung (5) an einer Quernut vorgesehen ist, die in die Wandung der Nut (4) eingreift.

7. Dichteinrichtung nach Anspruch 4 und/oder 5, **dadurch gekennzeichnet, dass** die Quernut und/oder die Querrippe länglich ausgebildet ist und sich im wesentlichen quer zu der Nut (4) erstreckt.

8. Dichteinrichtung nach einem der Ansprüche 4 bis 6, **dadurch**
**gekennzeichnet, dass** die Quernut und /oder die Querrippe zugleich einen Ansatz (9) des Stützkörpers (2) übergreift, der diesen an seiner Unterseite im Bereich der Einstülpung (6) U-förmig ergänzt.

9. Dichteinrichtung nach einem der Ansprüche 1 bis 9, **dadurch gekennzeichnet, dass** die Nut nur im Bereich der Einstülpung glockenförmig so erweitert ist, dass der Schlauch (3) nach dem Einfügen des Stützkörpers (2) in den eingestülpten Abschnitt einfügbar ist, ohne dass eine nennenswerte, elastische Verformung des Schlauches (3) eintritt.

10. Dichteinrichtung nach einem der Ansprüche 9, bei der die Hinterschneidung an einer Querrippe vorgesehen ist, der in die Nut (4) eingreift, **dadurch gekennzeichnet, dass** die Querrippe so bemessen ist, dass die eingestülpte Wandung des Schlauches (3) schon vor der Einspeisung von Druckluft elastisch deformiert ist.

11. Dichteinrichtung nach Anspruch 10, **dadurch gekennzeichnet, dass** die eingestülpte Wandung durch die Querrippe schon vor der Einspeisung von Druckluft an der Stelle der größten Deformierung um 30 bis 70 % Zusammengedrückt ist, vorzugsweise um 40 bis 60 %, der ursprünglichen, doppelten Wandstärke.

## Claims

1. A sealing arrangement for the gap (1) between two adjacent inflexible machine parts (20, 30), comprising at least one elastically expandable tube (3) which can be inflated over an inflexible supporting body (2), is fitted into a groove (4) with an opening in the side wall of one of the machine parts (20, 30) and, when inflated, can be placed against the machine part (30, 20) lying opposite the opening, at least one end of the tube (3) being provided with a peripheral pushed-in portion (6) which engages in its interior, the supporting body (2) being fitted into the inside of the pushed-in portion (6), and it being possible for the tube (3) after inflation also to be placed radially outside the supporting body and therefore over the entire length L of the groove (4) against the other machine part (20, 30), **characterized in that**, in order to prevent a longitudinal displacement of the tube during the inflation process, the groove (4) is provided in the region of the pushed-in portion (6) with at least one inflexible undercut (5) which extends transversely with respect to the longitudinal direction and in which the tube interlocks transversely with respect to the longitudinal direction in the inflated state.

2. A sealing arrangement according to claim 1, **characterized in that** the groove (4) is provided with at least one undercut (5) in each case on both sides in the region of the pushed-in portion (6).

3. A sealing arrangement according to claim 1 or 2, **characterized in that** the groove (4) has at least two consecutive undercuts (5) in the longitudinal direction of the tube (3).

4. A sealing arrangement according to any one of claims 1 to 3, **characterized in that** each undercut (5) is of rounded design in the partial regions touching the tube (3).

5. A sealing arrangement according to any one of claims 1 to 3, **characterized in that** the undercut (5) is provided on a transverse rib which engages in the groove (4).

6. A sealing arrangement according to any one of claims 1 to 3, **characterized in that** the undercut (5) is provided on a transverse groove which engages in the wall of the groove (4).

7. A sealing arrangement according to claim 4 and/or 5, **characterized in that** the transverse groove and/or the transverse rib is/are of elongated design and extends/extend essentially transversely with respect to the groove (4).

8. A sealing arrangement according to any one of claims 4 to 6, **characterized in that** the transverse groove and/or the transverse rib at the same time engages/engage over an extension (9) of the supporting body (2), which extension supplements the latter on its lower side in a U-shaped manner in the region of the pushed-in portion (6).

9. A sealing arrangement according to any one of claims 1 to 8, **characterized in that** the groove is expanded in a bell-shaped manner only in the region of the pushed-in portion such that, after the supporting body (2) is fitted into the pushed-in section, the tube (3) can be fitted without a significant elastic deformation of the tube (3) occurring.

10. A sealing arrangement according to any one of claims 1 to 9, in which the undercut is provided on a transverse rib which engages in the groove (4), **characterized in that** the transverse rib is dimensioned in such a manner that the pushed-in wall of the tube (3) is elastically deformed even before compressed air is fed in.

11. A sealing arrangement according to claim 10, **characterized in that** the pushed-in wall is compressed by the transverse rib at the point of greatest deformation by 30 to 70%, preferably by 40 to 60%, of the original double wall thickness even before compressed air is fed in.

## Revendications

1. Garniture d'étanchéité pour la fente (1) entre deux parties de machine (20, 30) voisines et inflexibles, comprenant au moins un flexible (3) extensible de façon élastique, gonflable au-dessus d'un corps de soutien (2) inflexible, qui est inséré dans une rainure (4) avec un orifice dans la paroi latérale de l'une des parties de machine (20, 30) et qui peut être appliqué gonflé sur la partie de machine (30, 20) faisant face à l'orifice, au moins une extrémité du flexible (3) étant dotée d'une partie repliée vers l'intérieur (6) périphérique et s'engageant dans son espace intérieur, le corps de soutien (2) étant inséré côté intérieur dans la partie repliée vers l'intérieur (6), le flexible (3) pouvant être appliqué après le gonflage également radialement à l'extérieur du corps de soutien et de ce fait sur toute la longueur L de la rainure (4) sur l'autre partie de machine (20, 30), **caractérisée en ce que** la rainure (4) est dotée, afin d'empêcher un déplacement longitudinal du flexible lors du processus de gonflage, dans la zone de la partie repliée vers l'intérieur (6) d'au moins une contre-dépouille (5) inflexible et qui s'étend transversalement à la direction longitudinale, dans laquelle il s'accroche dans l'état gonflé transversalement à la direction longitudinale.

2. Garniture d'étanchéité selon la revendication 1, **caractérisée en ce que** la rainure (4) est dotée sur les deux côtés dans la zone de la partie repliée vers l'intérieur (6) de respectivement au moins une contre-dépouille (5).

3. Garniture d'étanchéité selon la revendication 1 ou 2, **caractérisée en ce que** la rainure (4) présente dans la direction longitudinale du flexible (3) au moins deux contre-dépouilles (5) disposées l'une derrière l'autre.

4. Garniture d'étanchéité selon l'une quelconque des revendications 1 à 3, **caractérisée en ce que** chaque contre-dépouille (5) est réalisée arrondie dans les zones partielles touchant le flexible (3).

5. Garniture d'étanchéité selon l'une quelconque des revendications 1 à 3, **caractérisée en ce que** la contre-dépouille (5) est prévue sur une nervure transversale qui s'engage dans la rainure (4).

6. Garniture d'étanchéité selon l'une quelconque des revendications 1 à 3, **caractérisée en ce que** la contre-dépouille (5) est prévue sur une rainure transversale qui s'engage dans la paroi de la rainure (4).

7. Garniture d'étanchéité selon la revendication 4 et/ou 5, **caractérisée en ce que** la rainure transversale et/ou la nervure transversale est/sont réalisées de façon allongée et s'étend/s'étendent essentiellement transversalement à la rainure (4).

8. Garniture d'étanchéité selon l'une quelconque des revendications 4 à 6, **caractérisée en ce que** la rainure transversale et/ou la nervure transversale recouvre en même temps une embase (9) du corps de soutien (2), qui complète celui-ci sur son côté inférieur dans la zone de la partie repliée vers l'intérieur (6) en forme de U.

9. Garniture d'étanchéité selon l'une quelconque des revendications 1 à 9, **caractérisée en ce que** la rainure est élargie en forme de cloche seulement dans la zone de la partie repliée vers l'intérieur de telle sorte que le flexible (3) peut être inséré après l'insertion du corps de soutien (2) dans la section repliée vers l'intérieur sans qu'une déformation élastique notable du flexible (3) se produise.

10. Garniture d'étanchéité selon la revendication 9, sur laquelle la contre-dépouille est prévue sur une nervure transversale qui s'engage dans la rainure (4), **caractérisée en ce que** la nervure transversale est dimensionnée de telle sorte que la paroi repliée vers l'intérieur du flexible (3) est déformée élastiquement déjà avant l'injection de l'air comprimé.

11. Garniture d'étanchéité selon la revendication 10, **caractérisée en ce que** la paroi repliée vers l'intérieur est comprimée par la nervure transversale déjà avant l'injection de l'air comprimé, à l'endroit de la plus grande déformation de 30 à 70 %, de préférence de 40 à 60 % de l'épaisseur de paroi double initiale.
